# EUROPEAN PATENT SPECIFICATION

(11) **EP 0 328 503 B1**
(45) Date of publication and mention of the grant of the patent: **28.04.1993**
(21) Application number: 89850043.4
(22) Date of filing: 09.02.1989
(51) Int. Cl.: D21G 1/02, F16C 13/00

(54) **Method for regulating the temperature of an adjustable-temperature and variable-crown roll and a temperature-regulation system intended for carrying out the method**
Verfahren zur Temperaturregelung einer temperaturregulierbaren Durchbiegungsausgleichswalze und Temperaturregelungssystem zur Durchführung des Verfahrens
Procédé pour la régulation de la température d'un rouleau à température et à flexion réglable et système de régulation de la température pour l'application du procédé

(30) Priority: 10.02.1988 FI 880618
(43) Date of publication of application: 16.08.1989
(73) Proprietor: VALMET PAPER MACHINERY INC., 00130 Helsinki (FI)
(72) Inventor: Eskelinen, Juhani, SF-40630 Jyväskylä (FI); Niskanen, Juhani, SF-90460 Oulunsalo (FI)
(74) Representative: Rostovanyi, Peter

(56) References cited:
- EP-A- 0 188 238
- EP-A- 0 210 388
- GB-A- 2 041 158
- US-A- 4 679 287

## Description

The invention concerns a method for regulating the temperature of an adjustable-temperature and variable-crown roll, in which said roll the roll mantle, arranged to revolve on the stationary roll axle, is loaded by the intermediate of a pressure medium so as to correct the deflection of the roll mantle and which said roll is heated by means of heating fluid passed onto the inside face of the roll mantle.

The invention also concerns a temperature-regulation system for an adjustable-temperature and variable-crown roll, which is intended for carrying out the method and which comprises means for heating the roll mantle by passing heating fluid onto the inside face of the roll mantle, said means including means for heating the heating fluid and for adjusting its temperature as well as means for the supply of heating fluid.

Variable-crown and adjustable-temperature rolls are needed and used in paper machines, e.g., in calenders, and additionally such rolls are used, e.g., in supercalenders. For example, as the upper roll of a supercalender, a heatable, so-called "hot roll" is used, whereat it is desirable to make this roll as hot as possible in operation. At the same time, of course, the temperature of the roll mantle should be as uniform as possible, because the temperature of the roll mantle has a considerable significance for the calendering result.

In prior art, several different solutions are known for the heating of variable-crown rolls and for the regulation of the temperature of such rolls. E.g., in the US Patent 4,679,287 a variable-crown roll is described which is also heated so as to bring the temperature of the roll mantle to the desired level. In the solution suggested in said US patent, the heating of the roll is, yet, accomplished incorrectly, for by means of the heating system in accordance with said US patent an even temperature profile is not obtained for the roll mantle. This is due to the fact that in said US patent the heating fluid is passed into the roll from one end of the roll, and the fluid is allowed to flow axially through the roll so that it heats the roll mantle at the same time. The heating fluid is removed from the interior of the roll mantle through the opposite end of the roll. It follows from this solution that an even temperature profile is not obtained for the roll mantle, but the profile becomes unavoidably inclined so that at one end of the roll the temperature is higher than at the opposite end of the roll.

From the US Patent 4,282,639 a different arrangement for the heating of a variable-crown roll is known. In this patent, the roll is associated with a pump, and the pump is connected in a fluid circulation circuit. Said circuit includes heat exchangers, which are connected to the return pipe and by means of which said heat exchangers heat is transferred from the return pipe to the pressure pipe. The device further includes coolers which are arranged in the return pipe after the heat exchanger. The roll is heated by spraying heated fluid out of nozzles against the inner face of the roll mantle. However, in the solution of said US patent, it has not been taken into account that, by spraying of heated fluid onto the face of the roll mantle, the temperature profile of the outer face of the roll mantle cannot be kept even, because heat is conducted out of the roll mantle by the intermediate of the web passing over the roll, which said web always has a width smaller than the width of the roll. Thus, in the end areas of the roll mantle, from which heat is not conducted away in the corresponding way, the temperature is considerably higher than in the middle area of the mantle. This is further contributed to by the fact that, even if hot fluid were not sprayed onto the end areas of the mantle, heat is conducted along the roll mantle from the middle area towards the end areas, so that the direction of the heat flow is towards the end areas.

The object of the present invention is to provide a method and a system operating in accordance with the method by means of which the drawbacks involved in the prior-art solutions are avoided and by means of which a substantial improvement is achieved over the prior-art solutions.

In view of achieving the objectives given above and those that will come out later, the method in accordance with the invention is mainly characterized in that the heating fluid is passed into the roll to the areas of the roll mantle from which heat is removed out of the roll by means of conduction in the radial direction of the roll, i.e. to the areas in which the direction of the flow of heat is radially away from the roll, and that from the hot areas in the roll mantle, i.e. from the areas from which heat is not removed by conduction in the radial direction away from the roll mantle, heat is removed by passing cooling fluid to said hot areas.

On the other hand, the system that carries out the method is mainly characterized in that the roll heating means are arranged to feed heating fluid to the areas of the roll mantle from which heat is removed from the roll, e.g., via a web running over the roll, by conduction, and that the system further includes roll cooling means, which are arranged so that they feed cooling fluid in an adjustable way to the areas of the roll mantle from which heat is not removed in the radial direction of the roll by conduction.

By means of the invention, compared with the prior art, significant advantages are obtained, in respect of which the following should be stated. By means of the method and system in accordance with the invention, the temperature of a hot roll, for example used as the upper roll of a supercalender, can be made very high while the temperature of the roll mantle is, however, at the same time, uniform. In the invention, the temperature of the centre line in a cross-section of the roll mantle can be made to remain substantially invariable, for which reason no thermal distortions occur in the roll mantle.

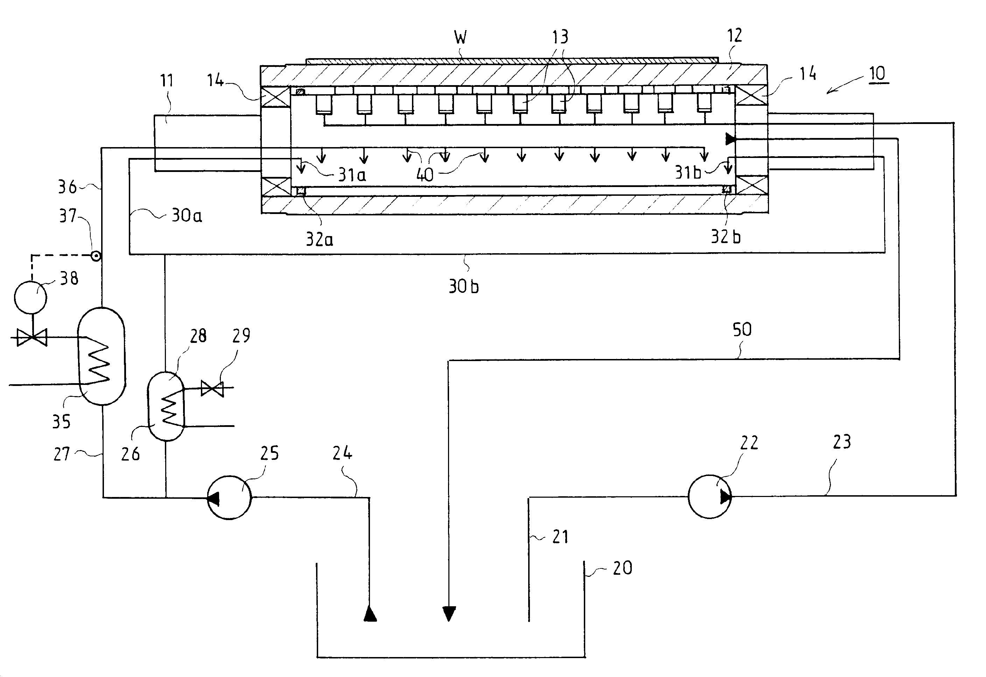

The other advantages and characteristic features of the invention come out from the following detailed description of the invention, wherein the invention is described with reference to an exemplifying embodiment of the invention, shown in the figure in the accompanying drawing, to which said embodiment the invention is, however, not strictly confined.

In the figure in the drawing, the variable-crown roll adjustable in zones is denoted generally with the reference numeral 10. The roll 10 is intended to be used, e.g., as a hot upper roll of a supercalender, even though a roll in accordance with the figure can also be used elsewhere, e.g. in paper machines or in finishing equipment for paper web or equivalent, wherein a roll of adjustable deflection and adjustable temperature is needed. The roll 10 includes a stationary axle 11, on which a hollow roll mantle 12 is mounted as revolving. The roll mantle 12 of the roll 10 in accordance with the figure is supported on the axle 11 adjustably by means of loading elements 13 provided with glide shoes, which said glide shoes are supported on the inner face of the roll mantle 12 by the intermediate of a fluid film. Moreover, in the exemplifying embodiment shown in the figure, the roll 10 is journalled on the axle at both of its ends by means of bearings 14. The variable-crown roll 10 and the counter roll (not shown) define a nip between them, through which said nip the web W is arranged to run.

In the axial direction of the roll 10, the loading elements 13 are appropriately divided into zones, in which the pressure of the pressure medium (fluid) passed into the loading elements 13 is regulated individually so as to adjust the deflection of the roll 10 to the correct level. In the example shown in the figure, the pump 22 sucks fluid out of the tank 20 through the pipe 21 and feeds the pressurized fluid through the pressure pipe 23 to the loading elements 13. It is, however, understood that the illustration in the figure has been simplified and that in reality a pressure pipe of its own should pass into each of the zones in the roll 10, in which said pipes the pressure of the fluid is adjustable individually as required and in the desired way.

In accordance with the invention, the roll 10 is provided with a heating system and with a temperature-control system by means of which heat is introduced by means of the method of the invention into the roll 10 so that the heat supplied to the roll is distributed uniformly over the area from which the heat is removed out of the roll, i.e. the area in which the direction of the heat flow is outwards from the roll. In hot variable-crown rolls the temperature of the roll is, as a rule, in the axial direction, within the area of the web W lower than at the ends of the roll, because the heat can flow out of the roll most readily by means of conduction through the web W. Thus, heat must be supplied to the area of the web W. Since the supplied heat is also conducted along the roll mantle 12 from the area of the web W to the ends of the roll, the temperature of the end areas of the roll mantle 12 still becomes higher than the temperature at the middle area of the roll. This is why, in the method of the invention, heat is removed from the areas of the roll ends in order that the axial temperature profile of the roll mantle could be made as uniform as possible. It can be considered an essential feature and objective of the invention that attempts are made to make the heat flows at each point of the roll 10 adjustable in such a way that the temperature in the roll mantle can be made uniform.

In the method of the invention, the heat is introduced into the roll 10 by means of heating fluid, which is sucked by the heating/cooling pump 25 out of the tank 20 through the pipe 24 and which is fed by said pump along the pipe 27 into the first heat exchanger 35, which heats the fluid to the appropriate temperature. Thus, the heating fluid passes through the first heat exchanger 35 and along the pipe 36 to the interior of the roll mantle 12, where it is, being distributed substantially uniformly, passed onto the inner face of the roll mantle 12 so as to heat the roll mantle in the area that consumes heat, i.e. in the area of the web W. The heating fluid is passed onto the inner face of the roll mantle 12 appropriately by spraying, preferably by means of jet pipes 40, by means of distribution pipes provided with nozzles, or equivalent. The flow resistance in the jet pipes 40 or nozzles has been chosen high enough (pressure loss about 1 to 10 bars) in order that the heating fluid should be better distributed uniformly onto the roll mantle 12. In the method and system of the invention, the pressure fluid passed to the loading elements 13 of the zones has not been heated, nor is it allowed to be heated, in order that the temperature regulation in the roll should remain under control.

As was already stated above, the temperature in the end areas of the roll 10 becomes higher than in the remaining part of the roll, for which reason, in the method of the invention, heat is removed from said end areas. In the method of the invention this has been arranged so that cooling fluid is passed to the end areas of the roll 10 that require cooling. The supply of the cooling fluid is arranged, e.g., in the way shown in the figure, so that at the pressure side of the heating/cooling pump 25 the fluid pipe is divided into two branches so that the first branch 27 of the pipe passes in the way described above to the first heat exchanger 35, through which the fluid runs as heated into the roll 10, and the second branch 26 is passed to the second heat exchanger 28, wherein the fluid is cooled to the appropriate temperature. Said second heat exchanger 28 is provided with necessary valve members 29, regulating members, and equivalent, by means of which the temperature of the cooling fluid can be adjusted to the desired level. After the second heat exchanger 28, the fluid pipe is further branched into two branches 30a and 30b, which pass correspondingly, e.g. through axial bores formed into the axle 11, to the areas of each of the ends of the roll 10, in which areas, in a corresponding way, necessary nozzles or jet pipes 31a and 31b are provided, out of which the cooling fluid is sprayed directly onto the end area of the roll to be cooled. At each end of the roll mantle 12, at the boundaries between the areas to be cooled and to be heated, sealing guides 32a and 32b may be provided, whose function is to reduce the mixing together of hot fluid and cold fluid at said portions. The cooling fluid sprayed into the end areas of the roll is divided through the gap between the guides 32a and 32b and the inner face of the roll mantle 12 inwards, on one hand, and, on the other hand, supply of fluid may be arranged from the roll area to be cooled to the end bearings 14 of the roll 10 for lubrication of said bearings. The fluid can be removed out of the roll 10 at any point whatsoever without affecting the temperature of the roll mantle 12. In the figure, the return pipe of the fluid is denoted with the reference numeral 50. In the system in accordance with the invention, the interior of the roll 10 and the fluid tank 20 are substantially at the same temperature.

As a summary of the above, it can be ascertained that in the method and system of the invention, heat is supplied into the roll 10 in the form of heating fluid to the areas from which heat is removed, i.e. to the areas in which the direction of the flow of heat is outwards from the roll 10. Said area is placed, as was already described above, within the area of the web W. The heat, i.e. the heating fluid, is passed to said area in accordance with the invention so that the supplied heat is distributed in the way corresponding to the heat flow escaping out of the roll. Moreover, in the method and system of the invention, the roll 10 is cooled, i.e. cooling fluid is passed into the roll to the hot areas, i.e. to the areas of the roll towards which the flow of heat runs. As was also described above, said hot areas are placed at each end of the roll. Said hot areas are cooled appropriately in the proportion in which heat flows to said areas from outside said areas. By means of the method and system of the invention, the temperature at the centre line of a longitudinal section of the roll mantle 12 can be made to remain substantially invariable, in which case no thermal distortions occur in the roll mantle 12.

Above, the invention has been described by way of example with reference to the figure in the accompanying drawing, which shows a roll adjustable in zones and supported by means of a glide-shoe arrangement. The invention is, however, not confined to the exemplifying embodiment shown in the figure alone, but various embodiments of the invention may show variation within the scope of the inventive idea defined in the accompanying patent claims. The method and the temperature-control system in accordance with the invention can, thus, also be applied to such rolls of variable deflection in which a chamber of pressure fluid or a series of such chambers, defined, e.g., by means of axial seals, is arranged between the roll mantle and the axle, in which said roll the axial profile of the roll mantle is regulated in the desired way by adjusting the pressure in said chamber or series of chambers. The scope of the inventive idea also includes such variable-crown rolls in which, in the supporting of the roll mantle, in stead of the hydrostatic support used in the detailed exemplifying embodiment described above, or in combination with said hydrostatic support, hydrodynamic support is used. Further, the invention may be applied to such variable-crown rolls in which the support of the roll mantle is arranged by means of a combination that comprises the pressure-fluid chamber or series of chambers described above as well as glide-shoe arrangements supported on the roll mantle hydrostatically and/or hydrodynamically.

Also, as an analogical alternative for the method and the temperature-regulating system of the invention, it is possible to consider a solution in which, in stead of being applied to a roll to be heated, the invention is applied to a roll that is cooled. For example, in variable-crown rolls which are used in presses and in on-machine calenders and which are provided with synthetic coatings or with other soft-face coatings, the temperature of the coating may rise by the effect of the pressing to such an extent that, without cooling of the roll mantle, the coating might be damaged. Under these circumstances, such rolls must be cooled. In such rolls, the invention can be applied by removing heat out of the roll so that the heat removed out of the roll is distributed in the axial direction of the roll in the way corresponding to the flow of heat directed towards the roll.

## Claims

1. Method for regulating the temperature of an adjustable-temperature and variable-crown roll, in which said roll (10) the roll mantle (12), arranged to revolve on the stationary roll axle (11), is loaded by the intermediate of a pressure medium so as to correct the deflection of the roll mantle (12) and which said roll (10) is heated by means of heating fluid passed onto the inside face of the roll mantle (12), **characterized** in that the heating fluid is passed into the roll (10) to the areas of the roll mantle (12) from which heat is removed out of the roll (10) by means of conduction in the radial direction of the roll, i.e. to the areas in which the direction of the flow of heat is radially away from the roll, and that from the hot areas in the roll mantle (12), i.e. from the areas from which heat is not removed by conduction in the radial direction away from the roll mantle, heat is removed by passing cooling fluid to said hot areas.

2. Method as claimed in claim 1, **characterized** in that the heating fluid is passed into the roll (10) so that the heat supplied into the roll is distributed in the axial direction of the roll in the way corresponding to the flow of heat removed from the roll (10) and that cooling fluid is passed to the hot areas of the roll (10) in the same proportion in which heat flows to said hot areas from other parts of the roll (10).

3. Method as claimed in claim 1 or 2, **characterized** in that in the areas to be cooled in the roll (10), i.e. in said hot areas, or at the boundaries between the areas to be cooled and the area to be heated, a sealing fluid guide is used so as to reduce mixing together of cooling fluid and heating fluid.

4. Method as claimed in any of the preceding claims, **characterized** in that the cooling fluid is passed directly to the areas to be cooled in the roll and that at least part of the fluid used for cooling is passed out of the roll (10) through the end bearings (14) of the roll so as to lubricate said end bearings (14).

5. Method as claimed in any of the preceding claims, **characterized** in that said heating fluid and said cooling fluid are passed onto the inside face of the roll mantle (12) by spraying.

6. Temperature-regulation system for an adjustable-temperature and variable-crown roll, which is intended for carrying out the method as claimed in any of the preceding claims and which comprises means for heating the roll mantle (12) by passing heating fluid onto the inside face of the roll mantle (12), said means including means (35,37, 38) for heating the heating fluid and for adjusting its temperature as well as means (25,40) for the supply of heating fluid, **characterized** in that the roll heating means are arranged to feed heating fluid to the areas of the roll mantle (12) from which heat is removed from the roll (10), e.g., via a web (W) running over the roll (10), by conduction, and that the system further includes roll (10) cooling means, which are arranged so that they feed cooling fluid in an adjustable way to the areas of the roll mantle (12) from which heat is not removed in the radial direction of the roll by conduction.

7. Temperature-regulation system as claimed in claim 6, **characterized** in that the roll (10) heating devices are arranged in such a way that the heat supplied into the roll (10) by means of the heating fluid is distributed in the way corresponding to the flow of heat removed out of the roll (10) by means of conduction and that the roll cooling devices are arranged in such a way that the cooling produced by means of the cooling devices is distributed in the proportion in which heat flows to the areas to be cooled in the roll (10) from other parts of the roll (10).

8. Temperature-regulation system as claimed in claim 6, **characterized** in that the roll (10) cooling devices are arranged so that they can be switched out of operation so that exclusively heating fluid is passed into the roll (10).

9. Temperature-regulation system as claimed in claim 6 or 7, **characterized** in that sealing guides (32a,32b) are provided between the areas to be cooled and the area to be heated in the roll so as to reduce mixing together of heating fluid and cooling fluid.

10. Temperature-regulation system as claimed in any of the claims 6 to 9, **characterized** in that the heating fluid, and the cooling fluid, respectively, is arranged to be applied to the inner face of the roll mantle (12) by spraying by the intermediate of jet pipes (40, or 31a,31b, respectively), nozzles or equivalent.

## Patentansprüche

1. Verfahren zur Temperaturregelung einer temperaturregulierbaren Durchbiegungs-Ausgleichswalze, bei dem in der Walze (10) der drehbar auf der stationären Walzenachse (11) angeordnete Walzenmantel (12) durch ein Druckmedium derart beaufschlagt wird, daß die Durchbiegung des Walzenmantels (12) korrigiert wird, und bei dem die Walze (10) durch ein auf die Innenseite des Walzenmantels (12) aufgebrachtes Heizfluid beheizt wird,
dadurch **gekennzeichnet**,
daß das Heizfluid der Walze (10) in den Bereichen des Walzenmantels (12) zugeführt wird, von denen die Wärme aus der Walze (10) durch Wärmeleitung in radialer Richtung der Walze abgeführt wird, d.h. in Richtung auf die Bereiche, in denen der Wärmefluß radial von der Walze weg gerichtet ist, und daß aus den heißen Bereichen im Walzenmantel (12), d. h. aus den Bereichen, aus denen die Wärme nicht durch Wärmeleitung in radialer Richtung vom Walzenmantel abgeführt wird, Wärme durch Aufbringen eines Kühlfluids auf diese heißen Bereiche abgeführt wird.

2. Verfahren nach Anspruch 1,
dadurch **gekennzeichnet,**
daß das Heizfluid der Walze (10) derart zugeführt wird, daß die der Walze zugeführte Wärme in axialer Richtung der Walze entsprechend dem Wärmeabfluß von der Walze (10) verteilt wird, und daß das Kühlfluid den heißen Bereichen der Walze (10) im gleichen Verhältnis zugeführt wird, in dem die Wärme diesen heißen Bereichen von anderen Teilen der Walze (10) zugeführt wird.

3. Verfahren nach Anspruch 1 oder 2,
dadurch **gekennzeichnet**,
daß in den zu kühlenden Bereichen der Walze (10), d.h. in den heißen Bereichen oder an den Grenzen zwischen den zu kühlenden Bereichen und dem zu heizenden Bereich, eine dichtende Fluidführung verwendet wird, um die Vermischung von Kühl- und Heizfluid zu reduzieren.

4. Verfahren nach einem der vorhergehenden Ansprüche,
dadurch **gekennzeichnet,**
daß das Kühlfluid direkt den zu kühlenden Bereichen in der Walze zugeführt wird, und daß zumindest ein Teil des Kühlfluids aus der Walze (10) hinaus durch die stirnseitigen Lager (14) der Walze hindurch geführt wird, um diese stirnseitigen Lager (14) zu schmieren.

5. Verfahren nach einem der vorhergehenden Ansprüche,
dadurch **gekennzeichnet,**
daß das Heiz- und Kühlfluid auf die Innenseite des Walzenmantels (12) durch Sprühen aufgebracht werden.

6. Temperaturregelungssystem für eine temperaturregulierbare Durchbiegungs-Ausgleichswalze, geeignet zur Durchführung des Verfahrens nach einem der vorhergehenden Ansprüche, das eine Einrichtung zum Heizen des Walzenmantels (12) durch Aufbringen eines Heizfluids auf die Innenseite des Walzenmantels (12) enthält, wobei die Einrichtung Mittel (35,37,38) zum Aufheizen des Heizfluids und zum Einstellen seiner Temperatur als auch Mittel (25,40) zum Zuführen des Heizfluids enthält,
dadurch **gekennzeichnet,**
daß die Walzenheizeinrichtung derart angeordnet ist, daß sie Heizfluid den Bereichen des Walzenmantels (12) zuführt, aus denen Wärme von der Walze (10), z.B. durch ein über die Walze (10) laufendes Band (W) durch Wärmeleitung abgeführt wird, und daß das System weiterhin eine Kühleinrichtung für die Walze (10) enthält, die derart angeordnet ist, daß sie Kühlfluid in regulierbarer Weise den Bereichen des Walzenmantels (12) zuführt, von denen Wärme nicht in radialer Richtung der Walze durch Wärmeleitung abgeführt wird.

7. Temperaturregelungssystem nach Anspruch 6,
dadurch **gekennzeichnet,**
daß die Heizeinrichtung der Walze (10) derart angeordnet ist, daß die der Walze (10) mittels eines Heizfluids zugeführte Wärme entsprechend dem Wärmeabfluß von der Walze (10) durch Wärmeleitung verteilt wird und daß die Walzenkühleinrichtung derart angeordnet ist, daß die durch die Kühleinrichtung erzeugte Kühlung in dem Verhältnis verteilt wird, in dem den zu kühlenden Bereichen der Walze (10) aus anderen Teilen der Walze (10) Wärme zufließt.

8. Temperaturregelungssystem nach Anspruch 6,
dadurch **gekennzeichnet**,
daß die Kühleinrichtung für die Walze (10) derart angeordnet ist, daß sie ausgeschaltet werden kann, so daß der Walze (10) ausschließlich Heizfluid zugeführt wird.

9. Temperaturregelungssystem nach Anspruch 6 oder 7,
dadurch **gekennzeichnet**,
daß abdichtende Führungen (32a,32b) zwischen den zu kühlenden Bereichen und dem zu heizenden Bereich in der Walze angeordnet sind, um die Vermischung von Heizfluid und Kühlfluid zu reduzieren.

10. Temperaturregelungssystem nach einem der Ansprüche 6 bis 9,
dadurch **gekennzeichnet**,
daß das Heizfluid bzw. das Kühlfluid durch Sprühen mittels Düsen (40, oder 31a,31b), Mündstücke oder dergleichen auf die Innenseite des Walzenmantels (12) aufgebracht wird.

## Revendications

1. Procédé pour la régulation de la température d'un rouleau à température réglable et à flexion réglable, rouleau (10) dans lequel, l'enveloppe du rouleau (12), apte à tourner sur l'axe de rouleau fixe (11), est chargée par l'intermédiaire d'un agent de pression de façon à corriger la flexion de l'enveloppe du rouleau (12) et ce rouleau (10) étant chauffé au moyen d'un fluide chauffant amené sur la face intérieure de l'enveloppe du rouleau (12), procédé caractérisé en ce que le fluide de chauffage est amené au rouleau (10) sur les zones de l'enveloppe de rouleau (12) à partir desquelles la chaleur est prélevée du rouleau (10) par conduction dans la direction radiale du rouleau, c'est-à-dire vers les zones dans lesquelles la direction du flux de chaleur est éloignée radialement par rapport au rouleau et en ce que les zones chaudes dans l'enveloppe de rouleau (12), c'est-à-dire à partir des zones d'où la chaleur n'est pas prélevée par conduction en éloignement dans la direction radiale par rapport à l'enveloppe du rouleau, la chaleur étant évacuée par l'amenée d'un fluide de refroidissement sur les zones chaudes.

2. Procédé selon la revendication 1, caractérisé en ce que le fluide de chauffage est amené dans le rouleau (10) de façon à répartir la chaleur fournie au rouleau dans la direction axiale du rouleau de la manière correspondant au flux de chaleur prélevé du rouleau (10) et en ce que le fluide de refroidissement est amené aux zones chaudes du rouleau (10) dans la même proportion que la chaleur s'écoule vers les zones chaudes en provenance d'autres parties du rouleau (10).

3. Procédé selon les revendications 1 ou 2, caractérisé en ce que dans les zones à refroidir du rouleau (10), c'est-à-dire dans les zones chaudes ou aux limites entre les zones à refroidir et la zone à chauffer, on utilise un guide d'isolation de fluide de façon à réduire le mélange entre le fluide de refroidissement et le fluide de chauffage.

4. Procédé selon l'une quelconque des revendications précédentes, caractérisé en ce que le fluide de refroidissement est amené directement sur les zones à refroidir dans le rouleau et en ce qu'au moins une partie du fluide utilisé pour le refroidissement est évacuée du rouleau (10) par les paliers d'extrémité (14) du rouleau de façon à lubrifier ces paliers d'extrémité (14).

5. Procédé selon l'une quelconque des revendications précédentes, caractérisé en ce que le fluide de chauffage et le fluide de refroidissement sont amenés sur la face intérieure de l'enveloppe du rouleau (12) par pulvérisation.

6. Système de régulation de température pour un rouleau à température réglable et à flexion réglable destiné à mettre en oeuvre le procédé selon l'une quelconque des revendications précédentes et qui comprend des moyens pour le chauffage de l'enveloppe de rouleau (12) par amenée d'un fluide chauffant sur la face intérieure de l'enveloppe de rouleau (12), ces moyens comprenant des systèmes (35, 37, 38) destinés à chauffer le fluide chauffant et à régler sa température ainsi que des systèmes (25, 40) pour l'alimentation du fluide chauffant, caractérisé en ce que les moyens de chauffage de rouleau sont aptes à amener du fluide chauffant sur les zones de l'enveloppe de rouleau à partir desquelles la chaleur est évacuée du rouleau (10), par exemple par l'intermédiaire d'une bande (W) passant sur le rouleau (10), par conduction, et en ce que le système comprend de plus des moyens de refroidissement de rouleau (10) disposés de façon à amener le fluide de refroidissement d'une manière réglable aux zones de l'enveloppe de rouleau (12) à partir desquelles la chaleur n'est pas évacuée dans la direction radiale du rouleau par conduction.

7. Système de régulation de la température selon la revendication 6, caractérisé en ce que les dispositifs de chauffage du rouleau (10) sont disposés de façon que la chaleur amenée au rouleau (10) par l'intermédiaire du fluide chauffant est répartie de la manière correspondant au flux de chaleur évacué du rouleau (10) par conduction et en ce que les dispositifs de refroidissement de rouleau sont disposés de telle manière que le refroidissement produit grâce aux dispositifs de refroidissement est réparti dans la proportion dans laquelle la chaleur s'écoule vers les zones à refroidir du rouleau (10) provenant d'autres parties du rouleau (10).

8. Système de régulation de la température selon la revendication 6, caractérisé en ce que les dispositifs de refroidissement de rouleau (10) sont agencés de façon à pouvoir être commutés hors service afin de laisser exclusivement passer le fluide chauffant dans le rouleau (10).

9. Système de régulation de température selon l'une des revendications 6 ou 7, caractérisé en ce que les guides d'isolation (32a, 32b) sont prévus entre les zones à refroidir et la zone à chauffer dans le rouleau de façon à réduire le mélange entre le fluide chauffant et le fluide de refroidissement.

10. Système de régulation de température selon l'une quelconque des revendications 6 à 9, caractérisé en ce que le fluide chauffant et le fluide de refroidissement sont respectivement disposés de façon à être appliqués sur la face interne de l'enveloppe du rouleau (12) par pulvérisation au moyen de tuyaux gicleurs (40 ou 31a, 31b respectivement), buses ou dispositifs équivalents.
